# EUROPEAN PATENT APPLICATION

(11) **EP 4 220 786 A1**
(43) Date of publication of application: **02.08.2023**
(21) Application number: 23152344.0
(22) Date of filing: 19.01.2023
(51) Int. Cl.: H01M 8/1004, H01M 8/1246, H01M 8/2404, H01M 8/2432, H01M 8/12

(54) **A PLANT FOR CONTINUOUS FLOW MANUFACTURING OF SOLID OXIDE FUEL CELLS**

(30) Priority: 28.01.2022 IT 202200001463
(71) Applicant: Resoh Solutions S.r.l.s., 41124 Modena (MO) (IT)
(72) Inventor: Boccaccini, Dino Norberto, 42048 Rubiera (RE) (IT); Cannio, Maria, 42048 Rubiera (RE) (IT); Bonaccorso, Alfredo Damiano, Guardbridge, Fife (GB)
(74) Representative: Perani & Partners S.p.A.

(57) **Abstract**

Plant (1) for manufacturing solid oxide fuel cells, each cell comprising at least one cathode, one anode and one electrolyte, said anode comprising an anode support and an active anode, said plant comprising a plurality of plant units (10) comprising a depositing and pressing unit (20) configured to produce the anode and the electrolyte from processed raw material by depositing: one or more layers to form said anode support, one or more layers on the anode support to form said active anode; one or more layers on the active anode to form said electrolyte; a first heating unit (30) configured to perform a first heat treatment on the anode and the electrolyte by heating said anode and said electrolyte; a first printing unit (40) configured to at least partially deposit a cathode layer on the electrolyte to define the cathode of the solid oxide fuel cell; a second heating unit (50) configured to perform a second heat treatment on the anode, the electrolyte and the cathode layer by heating them to produce said fuel cell; said plant units (20, 30, 40, 50) being connected in series by means of a belt conveyor (N).

## Description

### Technical field

The present invention relates to a plant for manufacturing solid oxide fuel cells (Solid Oxide Cell SOC), according to claim 1.

Preferably, the plant of the present invention is configured to produce reversible solid oxide fuel cells (SOFC, SOEC and/or MS-SOFCs).

A further object of the present invention is a process for manufacturing solid oxide fuel cells realized by the plant of the present invention.

### State of the art

It is known to produce fuel cells by means of a batch plant (batches also being known as separate operating units or stations) and the related process.

Specifically, the known plants comprise a series of stations arranged in a facility whose connection is carried out indirectly by operators acting on the semi-finished products, transporting them from one station to another until the final product is obtained.

Conventional plants include manufacturing stations and related machines for carrying out the following steps:
- forming of the anode support by means of i) tape casting of the anode support formed by a mixture of 3YSZ and NiO, ii) depositing by screen printing or tape casting the active anode (8YSZ/NiO) over the previously formed anode support;
- sintering the anode support;
- electrolyte deposition (8YSZ) by flat screen printing;
- sintering to obtain the half-cell;
- deposition of the cathode (LSM, compositions without cobalt and which cannot contaminate the electrolyte) by flat screen printing;
- final sintering of the complete cell.

The known processes also provide for the depositing of a protective film, by means of flat screen printing, if the cathode comprises cobalt atoms.

In addition, in known alternative cases, the processes and related plants provide for the depositing and subsequent co-sintering of the anode and the electrolyte by means of flat screen printing.

### Problems of the Prior Art

The use of known processes and related batch plants leads to an increase in manufacturing times and therefore in the costs of solid oxide fuel cells.

In fact, the isolation of each station of the plant from the others involves firstly an increase in the transport times of the semi-finished products from one station to the next and, secondly, the staging times for the semi-finished products can reach up to 14 hours for sintering and up to 4 days for the manufacturing of a fuel cell.

Furthermore, the technologies for depositing the layers of the anode, the cathode and the protective films are realized by means of tape casting and/or flat screen printing which, acting directly on the semi-finished product, can damage it to the point of causing it to break. In addition, tape casting requires relatively long times necessary for drying the belt. These depositing technologies also further lengthen the manufacturing times of the cell as they require a long and accurate sintering of the semi-finished product before the subsequent steps to guarantee that the product has sufficient mechanical properties to support the subsequent stages of the process (tape casting and/or flat screen printing). In addition, the final shape of the cells is also given by laser cutting, producing a very high waste of raw material. Laser cutting also creates micro-cracks in the edge of the cells that can then lead to breakage during operation.

### Object of the Invention

The object of the present invention is to realize a plant for the manufacturing of solid oxide fuel cells that overcomes the drawbacks of the above-mentioned prior art.

In particular, it is an object of the present invention to provide a plant for the manufacturing of solid oxide fuel cells capable of reducing the manufacturing times of the cells themselves, optimizing their mass manufacturing as well as reducing their overall manufacturing costs.

The stated technical task and the specified objects are substantially achieved by a plant for the manufacturing of solid oxide fuel cells comprising the technical specifications set out in one or more of the appended claims.

### Advantages of the invention

Advantageously, the manufacturing plant of the present invention allows the manufacturing times of each solid oxide fuel cell to be reduced.

Advantageously, the manufacturing plant of the present invention makes it possible to produce solid oxide fuel cells in series.

Advantageously, the manufacturing plant of the present invention makes it possible to produce solid oxide fuel cells on a continuous manufacturing line preferably where the geometry of the fuel cell is defined digitally.

### BRIEF DESCRIPTION OF THE FIGURES

Further features and advantages of the present invention will become more apparent from the illustrative, and therefore non-limiting, description of a preferred, but nonexclusive, embodiment of a plant for manufacturing solid oxide fuel cells, as illustrated in the appended drawings, in which:

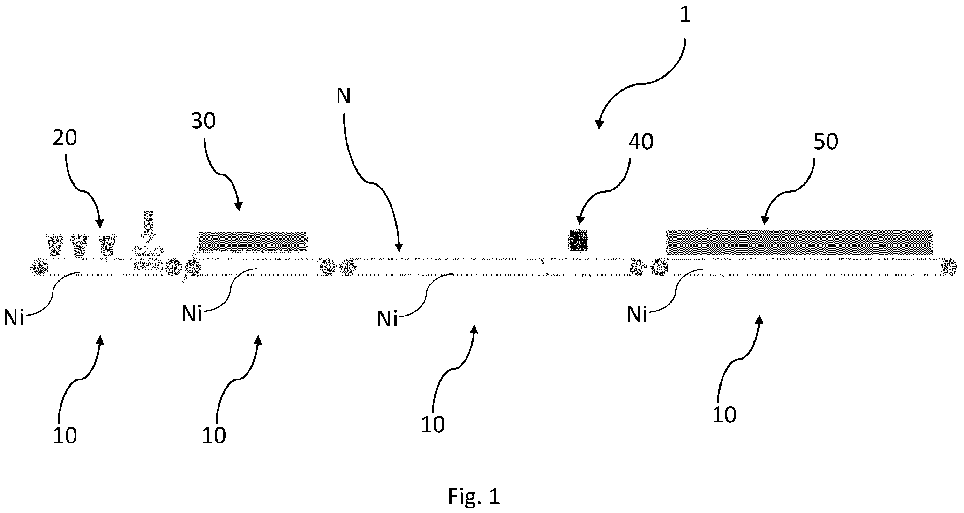

- Figure 1 shows a schematic block view of a plant for the manufacturing of solid oxide fuel cells according to one embodiment of the present invention;

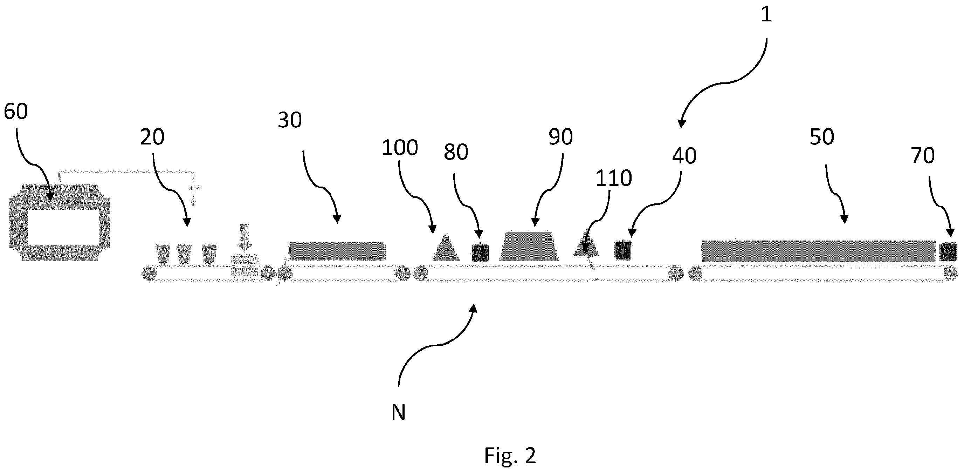

- Figure 2 shows a schematic block view of a plant for the manufacturing of solid oxide fuel cells according to one embodiment of the present invention;
- Figure 3 shows a schematic block view of a unit of the plant of Figure 1 or 2 in accordance with a first embodiment of such a unit;
- Figure 4 shows a schematic block view of a unit of the plant of Figure 1 or 2 in accordance with a second embodiment of said unit;
- Figure 5 shows a schematic block view of a unit of the plant of Figure 1 or 2 in accordance with a third embodiment of said unit.

### DETAILED DESCRIPTION

Even if not explicitly indicated, the individual features described with reference to specific embodiments are to be understood as additional to and/or interchangeable with other features, described with reference to other exemplary embodiments.

The present invention relates to a plant for the manufacturing of solid oxide fuel cells preferably SOFC (solid oxide fuel cell), SOEC (solid oxide electrolyzer cell) and MS-SOFCs (metal supported solid oxide cells) indicated overall with 1 in the figures.

For the purposes of the present invention, each solid oxide fuel cell comprises at least one anode, one electrolyte and one cathode coupled together. Preferably the anode comprises an anode support and an active anode arranged one above the other to define a multilayer structure on which the electrolyte and then the cathode are successively deposited. According to alternative embodiments, intermediate (protective) and/or surface (contact) layers can be deposited. It should be noted that the cathode, the anode and the electrolyte together define a multilayer structure preferably with a thickness of between 250 and 350µm up to thicknesses greater than 1mm in alternative embodiments. Alternatively, the fuel cell may provide a monolayer for the anode and the electrolyte on which a cathode is subsequently deposited.

The plant 1 comprises a plurality of plant units (or operating stations) 10 connected in series by means of a belt conveyor N and configured to produce solid oxide fuel cells in continuous mode or continuous flow.

Preferably, the plant units 10 of the plurality of units are arranged adjacent to each other i.e., in series one after the other so that materials/products/semi-finished products for the manufacturing of fuel cells leaving a unit enter the plant unit immediately following.

It should be noted that the passage of materials/products/semi-finished products between one plant unit and the next as well as the processing on materials/products/semi-finished products are carried out by means of the belt conveyor N.

In other words, the combination between the plant units 10 and the belt conveyor N makes it possible to manufacture solid oxide fuel cells in continuous flow by defining a manufacturing line for the single solid oxide fuel cells thus implementing a single manufacturing cycle for the corresponding manufacturing. It should be noted that fuel cells in all manufacturing steps (i.e., moving from one unit to another up until the manufacturing is complete) can be supported on support plates, for example, made of SiC or other refractory materials that do not contaminate the cell, in order to be transported along the belt conveyor N. In addition, it is also possible to arrange crushing plates at the fuel cells in all manufacturing steps to keep the cell compact during the transition between one unit and another and possibly during some steps. Specifically, the support plates and/or crushing plates allow safe movement while maintaining the structural integrity of the fuel cell during fuel cell manufacturing.

Preferably, the belt conveyor N may comprise one or more sections Ni connected to each other and associated with respective plant units 10.

The sections Ni of the belt conveyor N are arranged in series according to the arrangement of the plant units 10 for transporting materials/products/semi-finished products from one plant unit to the next.

The plurality of plant units 10 comprises a depositing and pressing unit 20 configured to produce the anode and the electrolyte of the fuel cell by depositing one or more layers of processed raw material. Specifically, the depositing and pressing unit 20 is configured to deposit one or more layers to make the anode support, one or more layers on the anode support to make the active anode, and one or more layers on the active anode to make the electrolyte. In detail, the depositing and pressing unit 20 makes it possible to sequentially deposit one or more layers to establish the multilayer structure of the anode and the electrolyte.

Said depositing and pressing unit 20 is configured to deposit processed raw material to produce the aforementioned layers to define the anode and the electrolyte.

It should be noted that the depositing and pressing unit 20 receives processed raw material that can be atomized, in (dry) ceramic or metallic powder, in ceramic/metallic paste/inks and/or in solution for ink-jet or screen printing. This atomized raw material is deposited sequentially on a mold or on the belt conveyor N (possibly taking into account the aforementioned support and crushing plates) and to produce the anode and the electrolyte in a multilayered, as well as possibly a monolayered, structure.

Each of the deposited layers may have a thickness of 8-1000µm, where preferably the anode support has a thickness of 250-1000µm, the active anode has a thickness of 10-15µm and the electrolyte has a thickness of 8-12µm. The layers can be deposited according to a rectangular or circular shape, but also any shape, as it is a digital depositing process with a surface between 2.5×2.5 cm² and 20×20 cm² and sides or radii of size between 2.5 and 10cm.

It should be noted that the depositing of the processed raw material and subsequent processing can be carried out directly on the belt conveyor or on a support plate as described above. For ease of exposition, the depositing and subsequent processing directly on the belt conveyor is considered below, meaning without exclusion the processing and manufacturing both directly on the belt conveyor and on the support plate arranged between the belt conveyor and the cell during manufacturing/processing

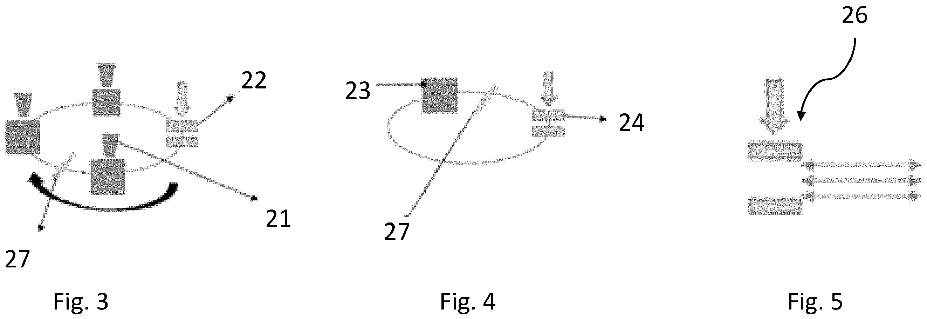

According to a preferred embodiment (Figure 3), the depositing and pressing unit 20 comprises devices for depositing the processed raw material 21 on the belt conveyor in the form of layers. The processed raw material in this embodiment is associated with the anode support, the active anode and the electrolyte. Said processed raw material, preferably of the atomized or powdered type, is therefore deposited sequentially to define the anode and the electrolyte.

For example, the depositing devices 21 comprise hoppers configured to sequentially deposit one or more layers on the belt conveyor N associated with the depositing and pressing unit 20.

The depositing and pressing unit 20 comprises belt pressing devices 22 configured to perform a pre-compaction of each layer following the respective depositing on the belt and a final pressing to produce the anode and the electrolyte.

Specifically, the belt conveyor N in this case is configured to receive a layer of processed raw material to transport it to the pressing device 22 for pre-compaction in the case of multiple layers and for final pressing in the case of a single layer.

If it is necessary to deposit several layers of processed rawmaterial, the belt conveyor is configured, after the pre-compaction of the first layer (anode support), to transport this layer of pre-compacted material to a device for depositing the processed raw material 21 for depositing a subsequent layer (active anode, thickness after sintering 10-15µm) to then proceed with the precompaction until the completion of the other layers (electrolyte, thickness after sintering 9-12µm and final pressing).

Preferably, the pre-compaction is performed in a pressure range between 5 and 20MPa and the final pressing is performed in a pressure range between 20-60MPa. It should be noted that the anode and the electrolyte produced by the present depositing and pressing unit preferably have a total combined thickness together of 250 to 1000µm. It is possible for the application of the active anode and the electrolyte to be carried out by the screen printing and/or ink-j et printing as clarified below, as an alternative to the technique of dry depositing of powder on the belt.

Preferably, the manufacturing times of the anode and the electrolyte according to the present embodiment are comprised between 30 seconds and 5 min (depending on the size and geometry of the cells).

According to an alternative preferred embodiment (Figure 4), the depositing and pressing unit 20 comprises a device for depositing and 3D-structuring (3D printing) 23 of one or more layers of processed raw material on the belt conveyor. A second alternative to the formation of the anode and the electrolyte by means of the device for depositing and 3D-structuring (3D printing) 23 for the dry depositing of pulverized or atomized processed raw material of ceramic type, is represented by the additive manufacturing technique based on the micro-extrusion of the necessary ceramic pastes/inks. A compacting step could be included after the depositing.

Specifically, the device for depositing and 3D-structuring is configured to directly deposit one or more layers of processed raw material one on top of the other on the belt conveyor N preferably having a thickness of between 9 and 1000µm divided substantially in the manner previously described depending on the layer to be deposited. The depositing and pressing unit 20 comprises a belt pressing device 24 configured to perform a final pressing to produce the anode and the electrolyte. Preferably, the final pressing is performed in a pressure range of 20 to 60MPa. It should be noted that the anode and electrolyte produced by this depositing (3D printing) and pressing unit have a total thickness of 250 to 1000µm.

Preferably, the manufacturing times of the anode and the electrolyte according to the present embodiment are between 30 seconds and a quarter of an hour (depending on the size and geometry of the cells).

More preferably, the belt pressing devices 22, 24 include presses, calenders or belt extruders.

According to an alternative embodiment, the depositing and pressing unit 20 comprises devices for depositing atomized raw material on a mold for manufacturing the anode and the electrolyte. As previously reported, the devices for depositing processed raw material may comprise e.g., hoppers which in combination with the belt conveyor N are configured to sequentially deposit the processed raw material in layers or a single layer for pre-compaction and final pressing.

Specifically, in this case the depositing and pressing unit 20 comprises at least one final pressing device 26 configured to perform a pre-compaction of each layer and a final pressing to produce the anode and the electrolyte.

It should be noted that the mold positioned on the belt conveyor N is transported sequentially according to the layers to be deposited (if the mold is in a single state, it is transported to the final pressing device for final pressing) from the devices for depositing processed raw material to the isostatic pressing device 26 for precompaction and/or final pressing.

Preferably, the pre-compaction is performed in a pressure range of 5 to 20MPa and the final pressing is performed in a pressure range of 20 to 60MPa. It should be noted that the anode and electrolyte produced by this depositing and pressing unit have a total thickness together of between 250 and 1000µm, where the individual layers may have a thickness following precompaction of between 10 and 100µm.

Preferably, the manufacturing times of the anode according to the present embodiment are between 1 and 15 minutes (depending on the size and geometry of the cells).

According to a preferred embodiment that can be combined with the previous embodiments and is illustrated for example in Figures 3 and 4, the depositing and pressing unit 20 comprises a set of sensors 27 configured to monitor the thickness of each layer and the thickness of the anode and of the electrolyte.

Specifically, the set of sensors 27 is configured to monitor the thicknesses upon depositing one or more layers, following the precompactions and following the final pressing.

Preferably, the sensor set 27 includes laser sensors for monitoring the thickness.

In accordance with an alternative embodiment, the depositing and pressing unit 20 provides for the deposit and the realization of the anode support in accordance with one of the three previous embodiments and the deposit of the active anode and the electrolyte by ink-j et printing or devices for screen printing. Specifically, the depositing and pressing unit 20 comprises devices for depositing one or more layers associated with the anode support. Such devices for depositing one or more layers associated with the anode support may provide devices for depositing processed raw material 21 on the belt conveyor in the form of layers or a device for depositing and 3D-structuring 23 one or more layers of processed raw material on the belt conveyor or devices for depositing processed raw material on a mold as described above. These devices in this case are dedicated to depositing the layer relative to the anode support where the processed raw material is therefore associated with the respective anode support. The depositing and pressing unit 20 comprises a belt pressing device 22 or a final pressing device 26 (described above) configured to perform a final pressing in a pressure range of 20 to 60MPa to produce the anode support of thickness of 250 to 1000µm. Finally, the depositing and pressing unit 20 comprises ink-jet type or screen printing type printing devices for depositing one or more layers associated with the active anode and the electrolyte. In this case, such devices are configured to sequentially deposit the active anode layer and the electrolyte layer onto the anode support. It should be noted that ink-jet printing or screen printing allows a film layer to be deposited with a reduced thickness compared to the layer defined in accordance with pressing or 3D printing. Here too, sensor sets 27 configured to monitor layer thicknesses may be employed. It should be noted that the present embodiment also has anode and electrolyte manufacturing times between 1 and 15 minutes (depending on the size and geometry of the cells).

In accordance with the preferred embodiment of the present invention, the depositing and pressing unit 20 is configured to sequentially deposit three layers of processed raw material associated respectively with the anode support, the active anode and the electrolyte to produce the anode and the electrolyte. Preferably, the layers comprise a combination of 3YSZ (yttria-stabilized zirconia 3), 8YSZ (yttria-stabilized zirconia 8), NiO (ceramic material such as nickel oxide) or metal powders. For example, the anode support includes a combination of 3YSZ (yttria-stabilized zirconia 3) and NiO (ceramic material such as nickel oxide) and optionally porizing agents. The anode formed by a combination of 8YSZ (yttria-stabilized zirconia 8), NiO and suitable optional porizing agents is deposited sequentially. The electrolyte is then deposited preferably attached to a dense layer of only 8YSZ on the active anode.

The plurality of plant units 10 comprises a first heating unit 30 configured to perform a first heat treatment on the anode and the electrolyte by heating them.

The first heating unit 30 is arranged downstream of the depositing and pressing unit 20 along the belt conveyor.

Specifically, the first heating unit 30 receives the semi-finished product (anode on which the electrolyte is deposited) from the depositing and pressing unit 20 to perform a first heat treatment.

It should be noted that in accordance with an alternative embodiment, the anode once produced is sent to the first heating unit 30 for a heat treatment on the anode (first partial heat treatment connected with the first heat treatment). Subsequently, the heat-treated anode is returned to the depositing and pressing unit 20 for depositing of the electrolyte and finally transported back to the heating unit 30 for a heat treatment pertaining to the electrolyte (second partial heat treatment associated with the first heat treatment). The semi-finished product thus produced will follow the plant and the process steps as for the previous embodiment. It should be noted that the depositing and pressing unit 20 may comprise sub-units dedicated to the depositing of the anode and electrolyte arranged along the belt conveyor N for the depositing of the anode and electrolyte interspersed with heating sub-units 30 of the heating unit (and any cooling sub-units of the respective cooling unit associated with the heating unit 30) for the sequential manufacturing of the anode and subsequently of the electrolyte.

Preferably, the first heating unit 30 is configured to perform the first heat treatment in a first temperature range of 800 to 1400°C.

More preferably, the first heating unit 30 is configured to perform the first heat treatment for a first time interval of 3 to 10 hours.

According to a preferred embodiment, the first heating unit 30 may comprise a continuous roller kiln.

Advantageously, the first heat treatment involves providing the anode and electrolyte with improved mechanical and structural properties.

The plurality of plant units 10 comprises a first printing unit 40 configured to at least partially deposit a cathode layer on the electrolyte.

Specifically, the cathode layer defines the cathode of the solid oxide fuel cell.

In detail, the first printing unit 40 is configured to deposit a cathode layer in the form of a film, that is, with one that is often lower than the conventional depositing of subsequently compacted processed raw material.

The first printing unit 40 is disposed downstream of the first heating unit 30 along the belt conveyor N. Specifically, the first printing unit 40 receives the semi-finished (anode and heat-processed electrolyte) from the first heating unit 30 to perform the cathode printing.

Preferably, the cathode printing times are between approx. 1 second and 5 minutes.

More preferably, the first printing unit 40 is configured to deposit a cathode film selected from LSC, LSCF or LSM.

According to a preferred embodiment, the first printing unit 40 comprises ink-jet printing devices or rotary screen printing devices for depositing the cathode film preferably of a thickness comprised between 15 and 40µm.

Advantageously, ink-j et printing devices and rotary screen printing devices speed up belt printing and continuous manufacturing; in particular ink-jet printers avoid direct contact between device and semi-finished product (anode and electrolyte) in a digital process where it is very simple to change the geometry of the depositing area and consequently the shape of the cell. Such indirect (jet) contact avoids the possibility of creating micro cracks by direct contact as is the case in conventional methods, providing superior mechanical and structural characteristics to the cell. In other words, the printing unit 40 of the present invention makes it possible to introduce a continuous process for the manufacturing of solid oxide fuel cells as well as to reduce costs and timing since the cells are created in a continuous process without interruptions, such as occur in the conventional method.

The plurality of plant units 10 comprises a second heating unit 50 configured to perform a second heat treatment on the anode, the electrolyte and the cathode layer by heating these to produce fuel cells. The second heating unit 50 is arranged downstream of the first printing unit 40 along the belt conveyor. Specifically, the second heating unit 50 receives the semi-finished product (anode and heat-processed electrolyte on which the cathode has been deposited) from the first printing unit 40 to perform a second heat treatment.

Preferably, the second heating unit 50 is configured to perform the second heat treatment in a second temperature range ranging from 1000 to 1350°C.

More preferably, the second heatingunit 50 is configured to perform the second heat treatment for a second time interval of 8 to 20 hours.

Even more preferably, the second heat treatment involves firing/sintering at a temperature of 1250°C for a time between 8-20 hours.

According to a preferred embodiment, the second heating unit 50 may comprise an electric continuous roller kiln.

In accordance with a preferred embodiment, the plurality of plant units 10 comprises a crude raw material processing unit 60 positioned upstream of the depositing and pressing unit 20 and configured to produce the processed raw material from crude raw material, e.g., an atomization unit. Specifically, the processing unit 60 receives crude raw material and, by means of known processes, produces atomized, powdered (dry or wet) ceramic or metallic processed raw material, in ceramic/metallic paste/inks and/or in solution for ink-jet or screen printing depending on the fuel cell to be produced and the depositing and pressing unit 20 used. In this way, the processing unit 60 sends the processed raw material to the depositing and pressing unit 20, preferably to the processed raw material depositing devices 21 or to the device for depositing and 3D-structuring 23 as well as to any printing devices.

Preferably, the processed raw material is produced in the order of 1kg per minute.

According to a preferred embodiment, the plurality of units comprises a second printing unit 70 located downstream of the second heating unit 50 along the belt conveyor and configured to deposit a contact film on the solid oxide fuel cell output from the second heating unit 50 along the belt conveyor. In other words, the second printing unit 70 receives the product (solid oxide fuel cell) from the second heating unit 50 to deposit a contact film on the solid oxide fuel cell. Such an optional contact film provides for sinterizable wet ink during normal operation of the fuel cell when in contact with stainless steel.

Preferably, the second printing unit 70 comprises ink-jet printing devices or rotary screen printing devices.

More preferably, the second printing unit 70 provides for depositing the contact film with a thickness comprised between 30 and 60µm.

Even more preferably, the second printing unit 70 provides for depositing the contact film in a time between approx. 1 second and 5 minutes.

According to a preferred embodiment, if the cathode layer comprises cobalt atoms e.g. LSC or LSCF, the plurality of units comprises a third printing unit 80 located between the first heating unit 30 and the first printing unit 40 along the belt conveyor N. Specifically, the third printing unit 80 receives the semi-finished product (anode and heat-processed electrolyte) coming from the first heating unit 30 to deposit a protective film (this CGO film is inserted between electrolyte and cathode) on the electrolyte.

In detail, the third printing unit 80 is configured to deposit a protective film on the electrolyte deposited on the anode output from the first heating unit 30.

Preferably, the third printing unit 80 comprises ink-jet printing devices or rotary screen printing devices.

More preferably, the third printing unit 80 provides for depositing a protective film comprising CGO capable of protecting the anode and the electrolyte from cobalt present in the cathode and avoiding damage to the solid oxide fuel cell.

In the presence of the third printing unit 80, the plurality of units comprises a third heating unit 90 located between the third printing unit 80 and the first printing unit 40 along the belt conveyor and configured to perform a third heat treatment on the anode and the electrolyte on which the protective film was printed by heating it in a third temperature range of 900 to 1100°C.

It should be noted that the third printing unit 80 and the third heating unit 90 provide for the depositing of the protective film and the respective heat treatment in a time between approx. 2-5 hours.

Alternatively, the third printing unit 80 and the third heating unit 90 are provided in the plant 1, but activated if the cathode film comprises cobalt atoms.

According to a preferred embodiment, the first heating unit 30, the second heating unit 50 and the third heating unit 90 define a single heating unit such as for example a roller kiln of the three-channel type.

In this way, in accordance with the path of the belt conveyor N, for example serpentine, a single heating unit allows all heat treatments to be managed simultaneously, solving problems of space, productivity and flexibility as well as reducing manufacturing times and costs.

Advantageously, the single heating unit makes it possible to optimize the first heat treatment, the possible heat treatment for the protective film and the second heat treatment.

According to a preferred embodiment, the plurality of units comprises a plurality of cooling units 100, 110, 120 (associated with the heating units 30, 50, 90).

Specifically, each cooling unit 100, 110, 120 is arranged downstream of a respective heating unit 30, 50, 90 and is configured to cool the product of the respective heating unit 30, 50, 90 preferably to a temperature of 40-70°C.

It should be noted that the cooling units 100, 110, 120 provide for cooling the respective semi-finished product/product in a time between 10 seconds and 5 min.

Preferably, the plant 1 comprises a control system associated with each plant unit 10, the belt conveyorN as well as any processing unit 60. This control system is configured to manage and control the manufacturing of the solid oxide fuel cells by coordinating the movement of the belt N, the activation of the different plant units as well as the pos sible activation of the processing unit 60.

It should be noted that the plant units 10 arranged in series along the belt conveyor N, which sequentially feeds each unit with the raw material and the semi-finished products produced by the previous unit, are intended to be one after the other so that the time required for the transition and subsequent processing is reduced. It should be noted that in certain embodiments the belt conveyor can transport the semi-finished product from one unit to the next and, after processing, transport the semi-finished product back to the previous unit for further processing and then send it back to the subsequent units (for example, the depositing of the electrolyte following a heat treatment on the anode). Specifically, the plant units 10 are grouped into stations arranged in series preferably in the following order:
- a first station comprising the processing unit 60 (optional);
- a second station comprising the depositing and pressing unit 10;
- a third station comprising the first heating unit 30,
- a fourth station comprising, according to the embodiments described above, in processing sequence a first cooling unit 100 (optional), a third printing unit 80 (optional), a third heating unit 90 (optional), a second cooling unit 110 (optional), a first printing unit 40;
- a fifth station comprising, according to the embodiments described above, in processing sequence a second heating unit 50, a second printing unit 70 (optional) and a third cooling unit 120 (optional).

It should be noted that according to one embodiment, the second and third stations can for example be combined as in the previously described embodiment relating to the depositing and sequential heat treatment of the anode and the electrolyte by means of sub-units.

A further object of the present invention is a method of manufacturing solid oxide fuel cells each comprising at least one anode and one cathode. It should be noted that the method is carried out using the previously described plant.

The method comprises a series of steps performed continuously on the belt conveyor N configured to connect the plant units. It is therefore useful to note that each step of the method can be followed by a subsequent intermediate transport step by the belt conveyor N of the material/semi-finished product/product from one plant unit to the next (and/or the previous) and/or the movement of the belt in the same unit, as, for example, can take place in the depositing and pressing unit 20 for the sequential depositing of several layers.

According to a preferred embodiment, the method comprises the steps of providing a depositing and pressing unit 20, providing a first heating unit 30, providing a first printing unit 40 and providing a second heating unit 50. It should be noted that the following plant units 10 may also be provided: a second printing unit 70, a third printing unit 80, a third heating unit 90, a plurality of cooling units 100, 110, 120. Such units are arranged in series as described above.

According to a preferred embodiment, a unit for processing crude raw material 60, such as an atomizer, can also be provided.

Specifically, the method comprises a step of providing a belt conveyor N for connecting the provided plant units 10 in series.

Preferably, the method comprises a preliminary step of processing the crude raw material to produce processed raw material. This step is carried out by the crude raw material processing unit 60.

Once the crude raw material has been processed, the method involves sending the processed raw material to the depositing and pressing unit 20.

The method comprises a step a) of depositing the layers of processed raw material one by one. The step of depositing is carried out by means of the depositing and pressing unit 20 and provides for the sequential depositing of the layers or of a single layer if present. Specifically, step a) provides for depositing one or more layers to make said anode support, one or more layers on the anode support to make said active anode, one or more layers on the active anode to make said electrolyte so as to produce the anode and the fuel cell electrolyte. It should be noted that step a) provides, in accordance with the embodiments of the depositing and pressing units 20, pressing the layers to produce the anode and the electrolyte. Specifically, the pressing step, carried out by means of the depositing and pressing unit 20, involves pressing the layers of processed raw material one by one by means of intermediate pre-compaction steps such as, for example, for the embodiments of Figures 3 and 5 followed by a final pressing. Or, in accordance with the embodiment of Figure 4, the pressing step provides for a final pressing of the deposited layers. This step, like the previous one, can also be carried out for the depositing and subsequent final pressing of a single layer of processed raw material. Alternatively, it is possible to deposit and press the layer relative to the anode support only and deposit the active anode and the electrolyte on the anode support itself by means of printing (ink-jet or screen printing).

Next, the method comprises the step b) of heating, by means of the first heating unit 30, the anode and the electrolyte to perform the first heat treatment. According to a preferred embodiment, step b) may involve first heating the anode and then the anode on which the electrolyte is deposited following the depositing of the electrolyte itself.

Once the anode and the electrolyte have been heat processed, the method involves step c) of depositing a cathode layer on the electrolyte, preferably printing the cathode film on the anode by j et printing or rotary screen printing by means of the first printing unit 40.

Optionally, if the cathode layer comprises cobalt atoms, the method comprises a step c1) (sub-step of step c)), priorto depositing the cathode layer, of depositing and fixing on the electrolyte a protective film by means of the third printing unit 80 and the third heating unit 90, on which the cathode layer is to be subsequently deposited.

Finally, the method comprises a step d) of thermally heating the anode, the electrolyte and the respective cathode (and any intermediate layers) to produce the fuel cell by means of the second heating unit 50.

Optionally, the method may comprise a subsequent step d1) (sub-step of step d)) of depositing the contact film on the solid oxide fuel cell by means of the second printing unit 70.

It should be noted that the steps of depositing and printing layers and any films are performed in succession on the surface of the semi-finished product/finished product opposite the surface facing the belt conveyor. Specifically, the anode support has a surface facing the belt (or the support plate), and an opposite depositing surface (the side surfaces are negligible in view of the thicknesses involved). The subsequent layers and films will have respective surfaces facing the depositing surface of the previous layer and opposite depositing surfaces up to the cathode and optionally to the contact film where the depositing surface is free and facing the external environment near the end of manufacturing.

It should be noted that the method may also include intermediate steps b1), c2) and d2) (sub-steps of the respective steps b), c) and d) performed in sequence after the respective heating steps and in accordance with what is described above) of cooling the semi-finished product leaving the heating units 30, 50, 90 by means of the respective cooling units 100, 110, 120.

The method comprises the step of continuously executing steps a)-d) on the belt conveyor in order to continuously produce fuel cells.

Further, the method may also include subsequent steps of extracting the produced oxide fuel cell from the belt and possibly packaging the same.

Below is a table summarising the steps of the method, carried out using the plant described above, showing the time ranges for manufacturing the fuel cell

| STEPS | Time range |
|---|---|
| (optional) Atomizing step | 1 kg per minute |
| Step a) [anode implementation] | 30 sec - 15 min depending on the embodiment, the size of the anode and the relative geometry |
| Step b) [first heat treatment] | 3-10 hours |
| (optional) Step b1) [cooling] | 10 sec - 5 min |
| (optional) Step c1) [depositing protective film] | 2-5 hours |
| (optional) Step c2) [cooling] | 10 sec - 5 min |
| Step c) [depositing cathode] | 1 sec- 5min |
| Step d) [second heat treatment] | 8-20 hours |
| (optional) Step d1) [depositing contact film] | 1 sec - 5 min |
| (optional) Step d2) [Cooling] | 10 sec - 5 min |

As can be seen from the table and as described above, the plant 1 and the related method steps allow solid oxide fuel cells to be produced in a time range of 24-30 hours. These timescales are achieved thanks to the use of a process and a plant that work continuously.

## Claims

1. A plant (1) for manufacturing solid oxide fuel cells, each cell comprising at least one cathode, one anode and one electrolyte, said anode comprising an anode support and an active anode, said plant being **characterized in that** it comprises a plurality of plant units (10) comprising:
- a depositing and pressing unit (20) configured to produce the anode and the electrolyte from processed raw material by depositing:
- one or more layers to form said anode support,
- one or more layers on the anode support to form said active anode;
- one or more layers on the active anode to form said electrolyte;
- a first heating unit (30) configured to conduct a first heat treatment on the anode and the electrolyte by heating said anode and said electrolyte;
- a first printing unit (40) configured to at least partially deposit a cathode layer on the electrolyte to define the cathode of the solid oxide fuel cell;
- a second heating unit (50) configured to conduct a second heat treatment on the anode, the electrolyte and the cathode layer by heating them to produce said fuel cell;
- said plant units (20, 30, 40, 50) being connected in series by means of a belt conveyor (N).

2. The plant (1) as claimed in claim 1, wherein the depositing and pressing unit (20) comprises:
- devices for depositing the processed raw material (21) on the belt conveyor as layers, said processed raw material being associated with the anode support, the active anode and the electrolyte;
- belt pressing devices (22) configured to provide pre-compaction of each layer in a pressure range of 5 to 20 MPa and final pressing in a pressure range of 20 to 60 MPa to produce the anode and the electrolyte with an overall thickness of 250 to 1000 µm.

3. The plant (1) as claimed in claim 1, wherein the depositing and pressing unit (20) comprises:
- a device for depositing and 3D-structuring (23) one or more layers of processed raw material on the conveyor belt, said processed raw material in powder and/or paste form being associated with the anode support, the active anode and the electrolyte;
- belt pressing devices (24) configured to provide final pressing in a pressure range of 20 to 60 MPa to produce the anode and the electrolyte with an overall thickness of 250 to 1000 µm.

4. The plant (1) as claimed in claim 2 or 3, wherein the belt pressing devices (22, 24) comprise belt presses, calenders or extruders.

5. The plant (1) as claimed in claim 1, wherein the depositing and pressing unit comprises:
- devices for depositing the processed raw material on a mold for producing the anode and the electrolyte, said processed raw material being associated with the anode support, the active anode and the electrolyte;
- a final pressing device (26) configured to provide pre-compaction of each layer in a pressure range of 5 to 20 MPa and final pressing in a pressure range of 20 to 60 MPa to produce the anode and the electrolyte with a thickness of 250 to 1000 µm.

6. The plant (1) as claimed in claim 1, wherein the depositing and pressing unit comprises:
- devices for depositing one or more layers associated with the anode support, said devices for depositing one or more layers associated with the anode support including devices for depositing the processed raw material (21) on the belt conveyor as layers or a device for depositing and 3D-structuring (23) one or more layers of processed raw material in powder and/or paste form on the conveyor belt, or devices for depositing the processed raw material (25) on a mold, with said processed raw material being associated with the anode support;
- a belt pressing device (22) or a final pressing device (26) configured to provide final pressing in a pressure range of 20 to 60 MPa to produce the anode support with a thickness of 250 to 1000 µm;
- ink-jet or screen printing devices for depositing one or more layers associated with the active anode and the electrolyte.

7. The plant (1) as claimed in any of claims 1 to 6, wherein the depositing and pressing unit (20) is configured to sequentially deposit three layers of processed raw material associated with the anode support, the active anode and the electrolyte respectively to produce the anode and the electrolyte, the layers preferably comprising a combination of 3YSZ, 8YSZ, NiO or metal dusts.

8. The plant (1) as claimed in any of claims 1 to 7, wherein:
- the first heating unit (30) is configured to conduct the first heat treatment in a first temperature range of 1000 to 1400°C. and comprises a continuous roller kiln;
- the second heating unit (50) is configured to perform the first heat treatment in a second temperature range of 1000 to 1350°C and comprises a continuous roller kiln.

9. The plant (1) as claimed in any of claims 1 to 8, wherein the first printing unit (40) is configured to deposit the cathode layer in the form of a film preferably selected from LSC, LSCF or LSM.

10. The plant (1) as claimed in any of Claims 1 to 9, in which the first printing unit (40) comprises ink-j et printing devices or rotary screen printing devices for depositing the anode film with a thickness of 15 to 40 µm

11. The plant (1) as claimed in any of claims 1 to 10 wherein the plurality of plant units (10) comprise:
- a crude raw material processing unit (60) located upstream of the storage and pressing unit (20) and configured to produce the processed raw material from crude raw material.

12. The plant (1) as claimed in any of claims 1 to 11, wherein the plurality of units comprise:
- a second printing unit (70) located downstream of the second heating unit (50) and configured to deposit a contact film on the solid fuel cell output by the second heating unit (50), said second printing unit (70) comprising ink-jet printing devices or rotary screen printing devices.

13. The plant (1) as claimed in any of claims 1 to 12, wherein if the cathode film comprises cobalt atoms, the plurality of units comprise:
- a third printing unit (80) located between the first heating unit (30) and the first printing unit (40) and configured to deposit a protective film on the electrolyte output by the first heating unit, said third printing unit (80) comprising ink-jet printing devices or rotary screen printing devices.

14. The plant (1) as claimed in claim 13, wherein the plurality of units comprise
- a third heating unit (90) located between the third printing unit (80) and the first printing unit (40) and configured to conduct a third heat treatment on the anode and on the electrolyte on which the protective film has been printed, thereby heating it to a third temperature range of 900 to 1100°C.

15. The plant (1) as claimed in claim 14, wherein said first heating unit (30), said second heating unit (50) and said third heating unit (90), define a single heating unit such as a roller kiln of the three-channel type.

16. The plant (1) as claimed in any of claims 1 to 14, wherein the plurality of units comprise:
- a plurality of cooling units (100, 110, 120), each cooling unit being located downstream of a respective heating unit (30, 50, 90) and being configured to cool what has been produced by its respective heating unit (30, 50, 90)

17. A method of manufacturing solid oxide fuel cells each comprising at least one cathode and one anode, said anode comprising an anode support, an active anode and an electrolyte, said method comprising the steps of:
- providing a depositing and pressing unit (20);
- providing a first heating unit (30);
- providing a first printing unit (40);
- providing a second heating unit (50);
said method being **characterized in that it comprises** the steps of:
- providing a belt conveyor (N) for connecting said provided plant units in series;
a) depositing by said depositing and pressing unit (20) one or more layers to form said anode support, one or more layers on the anode support to form said active anode, one or more layers on the active anode to form said electrolyte to thereby produce the anode and electrolyte of said fuel cell;
b) heating said anode and said electrolyte by said first heating unit (30);
c) depositing a cathode layer by said first printing unit (40) at least partially on said electrolyte, said cathode layer defining the cathode of the solid oxide fuel cell;
d) heating said anode, said electrolyte and said cathode by said second heating unit (50) to produce said fuel cell;
- continuously carrying out said steps a)-d) on said belt conveyor (N).
